# EUROPÄISCHE PATENTSCHRIFT

(11) **EP 2 148 402 B1**
(45) Veröffentlichungstag und Bekanntmachung des Hinweises auf die Patenterteilung: **19.04.2017**
(21) Anmeldenummer: 09008304.9
(22) Anmeldetag: 25.06.2009
(51) Int. Cl.: H02G 3/04

(54) **Leitungsführungskanal für Energie- und Versorgungsleitungen**
Cable guidance channel for energy and supply cables
Canal de guidage de conduite pour conduites d'alimentation et d'énergie

(30) Priorität: 22.07.2008 DE 202008009875 U
(43) Veröffentlichungstag der Anmeldung: 27.01.2010
(73) Patentinhaber: Tehalit GmbH, 67716 Heltersberg (DE)
(72) Erfinder: Schnurr, Richard, 66957 Vinningen (DE); Roschy, Gerd, 67714 Waldfischbach-Burgalben (DE)
(74) Vertreter: Nuss, Laurent

(56) Entgegenhaltungen:
- EP-A- 0 579 544
- EP-A- 1 033 800
- EP-A- 1 271 736
- DE-A1- 4 135 161
- GB-A- 1 398 848
- GB-A- 2 009 523
- US-B1- 6 374 523

## Beschreibung

Die vorliegende Erfindung betrifft einen Leitungsführungskanal für Energie- und Versorgungsleitungen gemäß dem Oberbegriff des Anspruchs 1.

Kabelkanäle oder Leitungsführungskanäle bestehen aus einem Unterteil und einem Oberteil (bzw. Deckel). Je nach Einsatzbereich existieren verschiedene Ausführungsformen und Varianten solcher Kanäle. Oft ist es erwünscht, dass sich der Leitungsführungskanal möglichst unauffällig in den jeweiligen Räumen integriert. Wandkanäle werden daher vorzugsweise so montiert, dass sie bündig mit der Wand abschließen. Nicht immer ist eine solche (annähernd unsichtbare) Wandmontage der Kanäle in Gebäuden oder in Räumen möglich. So gibt es Aufputzkanäle oder Raumsäulen mit Energie- und Datenversorgungsanschlüssen, die von den Wänden beabstandet im Raum optisch sichtbar montiert oder aufgestellt sind.

*Die* DE 41 35 161 A1*,* GB 2009523 A*,* EP 1 271 736 A*,* EP 1 033 800 A *beschreiben Leitungsführungskanäle für Energie- und Versorgungsleitungen, die aus einem Unterteil und einem Oberteil bestehen und bei denen in Schenkelaufnahmen ein Sichtelement enthalten ist. Im nächsten Stand der Technik, der* DE 41 35 161 A1 *soll ein Streifen, der vorzugsweise aus einem ferromagnetischen Material besteht, die äußere Erscheinungsform der Wandschiene verbessern.*

Die Erfinder haben sich die Aufgabe gestellt, die Funktionalität eines Leitungsführungskanals sowohl in optischer als auch technischer Hinsicht zu erhöhen, indem das Oberteil eines Leitungsführungskanals mit Elementen ausgerüstet wird, um zusätzliche optische und technische Funktionen eines Leitungsführungskanals zu bewirken.

Diese Aufgabe wird gelöst durch einen Leitungsführungskanal mit den Merkmalen des Anspruchs 1.

Der erfindungsgemäße Leitungsführungskanal besteht aus einem herkömmlichen U-förmigen Unterteil mit beidseitig an den Seitenwänden ausgeformten Deckelhalteprofilen, welche mit den entsprechenden Formprofilen des Deckels kooperieren. Die Besonderheit der Erfindung liegt in der Ausgestaltung und Nutzungsmöglichkeit des Deckels. Dieser besteht erfindungsgemäß aus zwei an der Längsseite ausgebildeten, U-förmig nach innen weisenden Schenkeln, in deren Schenkelaufnahmen ein beliebiges sogenanntes Sichtelement herausnehmbar eingesetzt werden kann. Das Sichtelement ist vorzugsweise eine transparente Kunststoffplatte, eine Scheibe oder ein Display. Hinter dem Sichtelement befindet sich ein Rückelement, das bevorzugt eine Grafik, ein Bild, eine photographische Darstellung oder eine technische Lichteinrichtung sein kann.

Beispielsweise kann das Sichtelement eine Glasscheibe und das Rückelement ein Bild sein.
Durch die Kombination von Sichtelement und Rückelement können verschiedene optische Eindrücke oder technische Funktionen beim Kanal erzielt werden. Dabei kann der Monteur den Leitungsführungskanal entsprechend den Kundenwünschen mit den vorhandenen Sichtelementen anpassen.
Neben den optischen Möglichkeiten bietet der erfindungsgemäße Leitungsführungskanal auch eine Reihe funktioneller Möglichkeiten. So ist es möglich, in die Schenkelführungen des Deckels eine Anzeigetafel oder ein Display einzusetzen. Auf dem Display können dann Informationen angezeigt werden. Die Versorgungsleitungen für das Display verlaufen verdeckt im Unterteil des Leitungsführungskanals.
Der Deckel kann entsprechend den einzelnen Ausführungsformen unterschiedlich gestaltet sein. Die seitlichen Schenkelprofile sind vorzugsweise mit einem Steg verbunden, der entweder parallel oder in einem Winkel zur Ebene des Sichtelements verlaufen kann. Ferner kann der Steg auch durchgehend sein, d.h. die beiden seitlichen Deckelschenkel miteinander verbinden und einen Deckelboden bilden. Dadurch erhält der Deckel zusätzliche Stabilität und das Sichtelement und/oder Rückelement wird von den in dem Unterteil verlaufenden Kabeln und Leitungen räumlich getrennt.

Die Deckelhalteprofile des Unterteils sind als U-förmige Laschen ausgebildet, so dass die Formhalteprofile des Oberteils beim Einsetzen in die Deckelhalteprofile entweder verrastet oder verklemmt werden können.
Die Erfindung wird in den nachfolgenden Zeichnungen erläutert. Es zeigen
- Fig. 1: eine Querschnittsdarstellung sowie eine isometrische Darstellung einer Ausführungsform des erfindungsgemäßen Leitungsführungskanals,
- Fig. 2: eine weitere Ausführungsform des erfindungsgemäßen Leitungsführungskanals in gleichen Darstellungen wie in der Fig. 1, und
- Fig. 3: verschiedene Ausgestaltungen der Oberteilgeometrie.

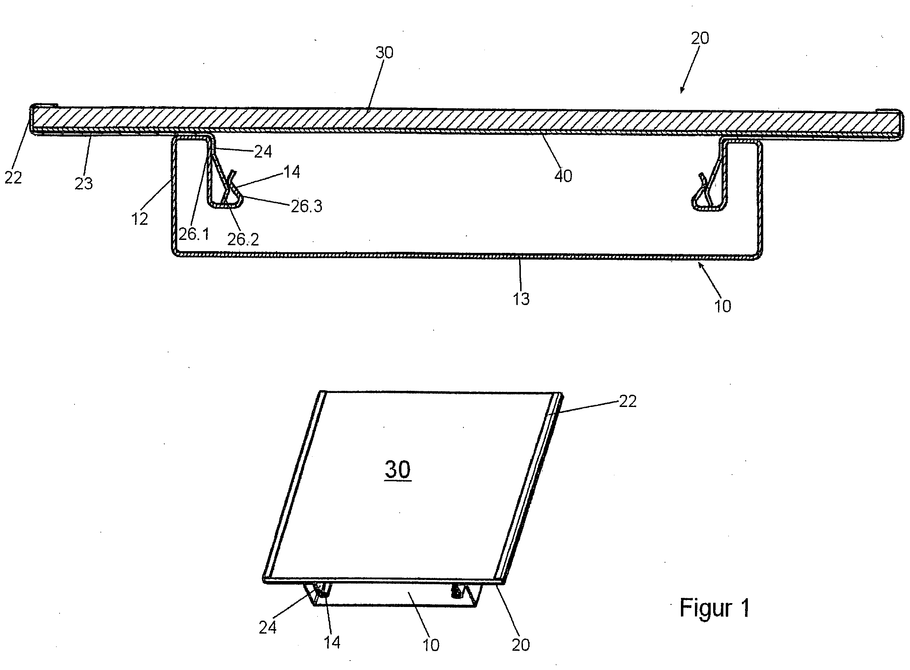

In Fig. 1 erkennt man einen Querschnitt des erfindungsgemäßen Leitungsführungskanals, bestehend aus Unterteil 10 und Oberteil 20. Das Unterteil 10 besteht aus einem Boden 13 und Seitenwänden 12. An den Seitenwänden 12 sind laschenförmige Deckelhalteprofile 14 ausgebildet. Die Deckelhalteprofile 14 bestehen aus einzelnen abgewinkelten Schenkelelementen, welche mit den Schenkelelementen des Formprofils 24 des Oberteils 20 an den Berührungsflächen 26.1, 26.2, 26.3 zur Anlage kommen und sich gegen diese abstützen. An dem Oberteil 20 ist an den längsseitigen Enden jeweils ein U-förmig nach innen ausgebildeter Schenkel 22 zu erkennen. Die Schenkel 22 bilden jeweils eine Schenkelaufnahme. In den Schenkelaufnahmen wird ein Sichtelement 30 geführt, also beispielsweise eine Scheibe, ein transparenter Kunststoff oder ein Display. Hinter dem Sichtelement 30 befindet sich ein zusätzliches Rückelement 40 Das Rückelement 40 kann ein beliebiges optisches oder technisches Element sein; das Sichtelement 30 dient zu dessen Schutz. In der gezeigten Ausführungsform ist das Sichtelement 30 transparent und das Rückelement 40 ein Farbmuster.

Das Sichtelement 30 ist vorzugsweise breiter als das Unterteil 10 des Kanals. Der Steg 23 ragt dazu seitlich über die Begrenzungen der Seitenwände 12 des Unterteils 10 heraus. Durch die Kooperation der Formprofile 24 des Oberteils 20 mit den Deckelhalteprofilen 14 des Unterteils 10 erfolgen eine Verbindung und ein Verschluss des Oberteils 20 mit dem Unterteil 10.

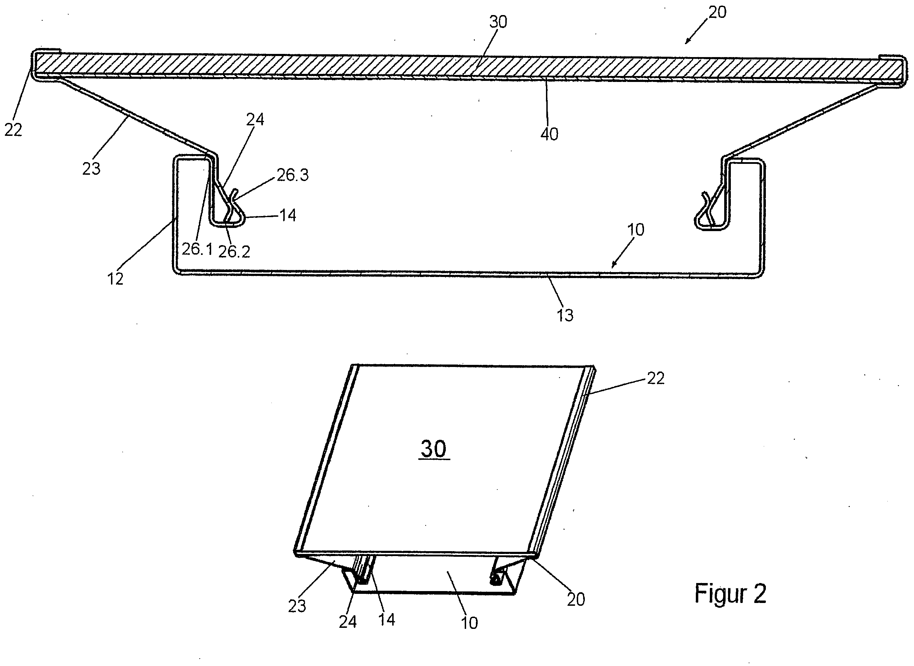

In Fig. 2 ist eine weitere Ausführungsform des erfindungsgemäßen Leitungsführungskanals gezeigt. Diese unterscheidet sich dadurch, dass das Sichtelement 30 und das Rückelement 40 gegenüber dem Unterteil 10 nach oben versetzt sind. Dies wird durch den nach unten geneigten Steg 23 erreicht, der einen stumpfen Winkel gegenüber dem horizontalen Boden 13 des Unterteils 10 einschließt. Je nach Winkelgrad des Stegs 23 kann der Abstand des Sichtelements 30 zum Unterteil 10 variiert werden.

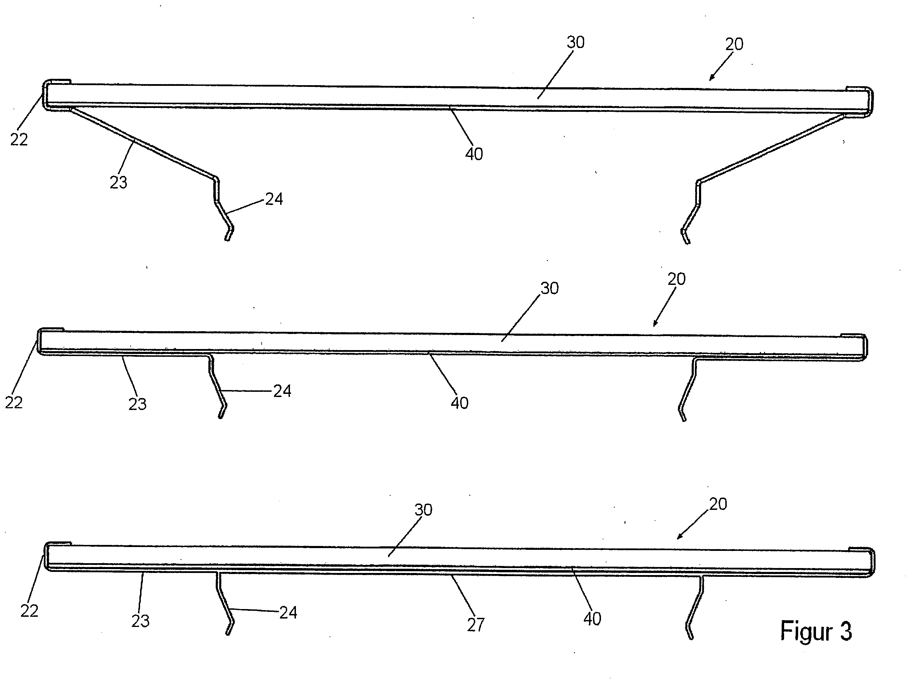

In Fig. 3 erkennt man Querschnittsgeometrien des Oberteils 20. In der oben gezeigten Ausführungsform sind die mit den Schenkeln 22 und den Formprofilen 24 verbundenen Stege 23 in einem Winkel nach unten geneigt. In der mittleren Ausführungsform verlaufen diese Stege 23 parallel zu dem Sichtelement 30 bzw. der Rückplatte 40. In der unteren Ausführungsform ist der Steg 23 durchgehend, d.h. der Kanalinnenraum ist durch einen Deckelboden 27 von dem Sichtelement 30 und dem Rückelement 40 getrennt.

## Patentansprüche

1. Leitungsführungskanal für Energie- und Versorgungsleitungen, umfassend
- ein Unterteil (10) mit
- einem Boden (13)
- zwei Seitenwänden (12) und
- an den Seitenwänden (12) ausgebildeten Deckelhalteprofilen (14),
- ein Oberteil (20) mit Formprofilen (24), welche mit den Deckelhalteprofilen (14) des Unterteils (10) kooperieren,
- an den Längsseitigen Enden des Oberteils (20) ist jeweils ein U-förmig nach innen zur Kanalmitte geneigter Schenkel (22) ausgebildet,
- die Schenkel (22) bilden Schenkelaufnahmen,
- in den Schenkelaufnahmen ist ein herausnehmbares Sichtelement (30) geführt,
- die Formprofile (24) des Oberteils (20) und die U-förmig nach innen geneigten Schenkel (22) sind jeweils mit einem Steg (23) verbunden, **gekennzeichnet durch** die Merkmale:
- das Sichtelement (30) ist transparent,
- in den Schenkelaufnahmen geführt ist hinter dem Sichtelement (30) ein Rückelement (40) angeordnet, vorzugsweise eine Grafik, ein Bild oder eine photographische Darstellung,
- die Deckelhalteprofile (14) des Unterteils (10) sind als U-förmige vom Boden (13) abgewandte Laschen aus einzelnen abgewinkelten Schenkelelementen ausgebildet, in welche die Formprofile (24) des Oberteils (20) greifen, wobei die Formprofile (24) Schenkelelemente umfassen und die Schenkelelemente der Deckelhalteprofile (14) mit den Schenkelelementen der Formprofile (24) an Berührungsflächen (26.1, 26.2, 26.3) zur Anlage kommen und sich gegen diese abstützen.

2. Leitungsführungskanal nach Anspruch 1, **gekennzeichnet durch** das Merkmal:
- das Sichtelement (30) ist eine Anzeigetafel oder ein Display.

3. Leitungsführungskanal nach einem der Ansprüche 1 oder 2, **gekennzeichnet durch** das Merkmal:
- das Sichtelement (30) oder das Rückelement (40) ist farbig ausgestaltet.

4. Leitungsführungskanal nach einem der Ansprüche 1 bis 3, **gekennzeichnet durch** das Merkmal:
- das Sichtelement (30) ist eine Glasscheibe, eine transparente Folie oder eine transparente Kunststoffplatte.

5. Leitungsführungskanal nach einem der Ansprüche 1 bis 4, **gekennzeichnet durch** das Merkmal:
- der Steg (23) verläuft zumindest teilweise parallel zu dem Sichtelement (30) oder Rückelement (40).

6. Leitungsführungskanal nach einem der Ansprüche 1 bis 4, **gekennzeichnet durch** das Merkmal:
- der Steg (23) ist in einem Winkel zur Ebene des Sichtelements (30).

7. Leitungsführungskanal nach einem der Ansprüche 5 oder 6, **gekennzeichnet durch** das Merkmal:
- der Steg (23) verläuft durchgehend und verbindet die beiden U-förmig nach innen geneigten Schenkel (22) des Oberteils (20).

## Claims

1. Cable duct for power and supply lines, comprising
- a lower part (10) having
- base (13),
- two side walls (12), and
- lid-retaining profiles (14) that are configured on the side walls (12),
- an upper part (20) having shaped profiles (24) which cooperate with the lid-retaining profiles (14) of the lower part (10),
- one leg (22) that is inwardly inclined in a U-shape toward the duct centre being configured on each of the ends of the upper part (20) on the longitudinal sides,
- the legs (22) forming leg receptacles,
- a retrievable visual element (30) being guided in the leg receptacles,
- the shaped profiles (24) of the upper part (20) and the legs (22) that are inwardly inclined in a U-shape each being connected by way of a web (23),
**characterized in that**
- the visual element (30) is transparent,
- a rear element (40), preferably graphics, an image, or a photographic illustration, that is guided in the leg receptacles is disposed behind the visual element (30),
- the lid-retaining profiles (14) of the lower part (10) are configured as U-shaped tabs from individual angled leg elements that face away from the base (13), in which tabs the shaped profiles (24) of the upper part (20) engage, wherein the shaped profiles (24) comprise leg elements, and the leg elements of the lid-retaining profiles (14) with the leg elements of the shaped profiles (24) come to bear on contact faces (26.1, 26.2, 26.3) and are supported on the latter.

2. Cable duct according to Claim 1, **characterized in that**
the visual element (30) is a display panel or a display.

3. Cable duct according to either of Claims 1 and 2, **characterized in that**
the visual element (30) or the rear element (40) is designed in colour.

4. Cable duct according to one of Claims 1 to 3, **characterized in that**
the visual element (30) is a glass pane, a transparent film, or a transparent plastics-material plate.

5. Cable duct according to one of Claims 1 to 4, **characterized in that**
the web (23) runs at least partially parallel with the visual element (30) or rear element (40).

6. Cable duct according to one of Claims 1 to 4, **characterized in that**
the web (23) is at angle to the plane of the visual element (30).

7. Cable duct according to either of Claims 5 and 6, **characterized in that**
the web (23) runs continuously, connecting the two legs (22) of the upper part (20) that are inwardly inclined in a U-shape.

## Revendications

1. Canalisation de conduite de câbles pour lignes d'énergie et d'alimentation, comprenant
- une partie inférieure (10) avec
- un fond (13)
- deux parois latérales (12) et
- des profilés de maintien de couvercle (14) formés sur les parois latérales (12),
- une partie supérieure (20) avec des profilés formés (24) qui coopèrent avec les profilés de maintien de couvercle (14) de la partie inférieure (10),
- une branche (22) inclinée vers l'intérieur en forme de U vers le milieu de la canalisation est formée sur chacune des extrémités des côtés longitudinaux de la partie supérieure (20),
- les branches (22) forment des logements à branches,
- un élément visuel (30) amovible est guidé dans les logements à branches,
- les profilés formés (24) de la partie supérieure (20) et les branches (22) inclinées vers l'intérieur en forme de U sont reliés chaque fois par une partie de liaison (23),
**caractérisée en ce que**
- l'élément visuel (30) est transparent,
- un élément arrière (40), de préférence un graphique, une image ou une représentation photographique est disposé derrière l'élément visuel (30), guidé dans les logements à branches,
- les profilés de maintien de couvercle (14) de la partie inférieure (10) sont réalisés sous la forme de languettes en forme de U éloignées du fond (13) à partir d'éléments de branche repliés individuels, dans lesquelles les profilés formés (24) de la partie supérieure (20) s'engagent, les profilés formés (24) de la partie supérieure (20) comprenant des éléments de branche et les éléments de branche des profilés de maintien de couvercle (14) viennent s'appliquer contre les éléments de branche des profilés formés (24) au niveau de surfaces de contact (26.1, 26.2, 26.3) et s'appuient contre ceux-ci.

2. Canalisation de conduite de câbles selon la revendication 1, **caractérisée en ce que**
- l'élément visuel (30) est un panneau d'affichage ou un écran.

3. Canalisation de conduite de câbles selon l'une des revendications 1 ou 2, **caractérisée en ce que**
- l'élément visuel (30) ou l'élément arrière (40) est réalisé en couleur.

4. Canalisation de conduite de câbles selon l'une des revendications 1 à 3, **caractérisée en ce que**
- l'élément visuel (30) est une vitre, une feuille transparente ou une plaque en matière plastique transparente.

5. Canalisation de conduite de câbles selon l'une des revendications 1 à 4, **caractérisée en ce que**
- la partie de liaison (23) s'étend au moins en partie parallèlement à l'élément visuel (30) ou à l'élément arrière (40).

6. Canalisation de conduite de câbles selon l'une des revendications 1 à 4, **caractérisée en ce que**
- la partie de liaison (23) fait un angle avec le plan de l'élément visuel (30).

7. Canalisation de conduite de câbles selon l'une des revendications 5 ou 6, **caractérisée en ce que**
- la partie de liaison (23) s'étend de façon continue et relie les deux branches (22) inclinées vers l'intérieur en forme de U de la partie supérieure (20).
